# EUROPÄISCHE PATENTSCHRIFT

(11) **EP 3 643 562 B1**
(45) Veröffentlichungstag und Bekanntmachung des Hinweises auf die Patenterteilung: **04.08.2021**
(21) Anmeldenummer: 19203593.9
(22) Anmeldetag: 16.10.2019
(51) Int. Cl.: B60N 2/52, F16F 9/54

(54) **FAHRZEUGSITZELEMENT FÜR EINEN FAHRZEUGSITZ MIT EINER RESTFEDERWEGVERSTELLEINRICHTUNG**
VEHICLE SEAT ELEMENT FOR A VEHICLE SEAT WITH A RESIDUAL SPRING PATH ADJUSTMENT DEVICE
ÉLÉMENT DE SIÈGE DE VÉHICULE POUR UN SIÈGE DE VÉHICULE DOTÉ D'UN DISPOSITIF DE RÉGLAGE DE COURSE DE RESSORT RÉSIDUELLE

(30) Priorität: 23.10.2018 DE 102018126391
(43) Veröffentlichungstag der Anmeldung: 29.04.2020
(73) Patentinhaber: GRAMMER AG, 92289 Ursensollen (DE)
(72) Erfinder: Fillep, Johannes, 92262 Birgland (DE); Schanderl, Florian, 92521 Schwarzenfeld (DE)
(74) Vertreter: Hannke, Christian

(56) Entgegenhaltungen:
- WO-A1-2008/054265
- DE-A1- 10 064 681
- FR-A- 1 148 088
- JP-U- H01 166 841

## Beschreibung

Die vorliegende Erfindung betrifft ein Fahrzeugsitzelement mit einer Restfederwegverstelleinrichtung für einen Fahrzeugsitz, wobei das Fahrzeugsitzelement ein erstes Befestigungsohr aufweist.

Aus dem Stand der Technik sind Restfederwegverstellungen derart bekannt, dass die Feder bzw. der Dämpfer, welcher im Regelfall mit zwei relativ zueinander schwingenden Elementen des Fahrzeugsitzes verbunden ist, mittels einer fluidischen Verstellung innerhalb des jeweiligen Elements eingestellt wird. Beispielsweise bei einem Dämpfer wird durch eine Druckveränderung in der Arbeitskammer der Kolben entsprechend weiter heraus gefahren oder hinein gefahren.

Derartige Restfederwegverstellungen sind jedoch kompliziert ausgebildet und greifen auch in die Funktionsweise von anderen Parametern mit ein, beispielsweise die Dämpfung bzw. Federung oder die Höhennivellierung.

FR 1 148 088 A und DE 100 64 681 A1 zeigen jeweils eine Restfederwegverstelleinrichtung, welche in ein Befestigungsohr eingebracht ist und eine exzentrische Bohrung aufweist.

Aufgabe der vorliegenden Anmeldung ist es daher, ein Fahrzeugsitzelement für einen Fahrzeugsitz mit einer Restfederwegverstelleinrichtung bereitzustellen, mittels welcher besonders einfach und ohne Eingriff in die Federung bzw. Dämpfung der Restfederweg der Federung oder Dämpfung eingestellt werden kann.

Kerngedanke der vorliegenden Anmeldung ist es daher, ein Fahrzeugsitzelement für einen Fahrzeugsitz mit einer Restfederwegverstelleinrichtung bereitzustellen, wobei das Fahrzeugsitzelement ein erstes Befestigungsohr aufweist, wobei die Restfederwegverstelleinrichtung in das erste Befestigungsohr einbringbar ist und die Restfederwegverstelleinrichtung einen Befestigungsohreinsatz mit einer exzentrischen Bohrung aufweist.

Das heißt, dass das Fahrzeugsitzelement ein erstes Befestigungsohr umfasst, in welches die Restfederwegverstelleinrichtung einbringbar ist. Weiter weist der Befestigungsohreinsatz eine exzentrische Bohrung auf, das heißt, dass die vorhandene Bohrung nicht mittig im Befestigungsohreinsatz angeordnet ist, sondern um einen Abstand bzw. einen Versatz gegenüber der Mitte des Befestigungsohreinsatzes verschoben ist.

Dabei ist es beispielsweise denkbar, dass das Fahrzeugsitz mindestens eines ist ausgewählt aus einem Federelement, einem Dämpfungselement, einem Niveausteuerungselement, oder einer Kombination davon. Dabei ist unter dem Niveausteuerungselement ein Element zur Erfassung einer aktuellen Sitzhöhe des Fahrzeugsitzes mit Ausgabe von dieser abhängigen Informationen, beispielsweise der Sitz ist zu hoch oder zu tief, und/oder Aktionen, beispielsweise eine direkte Betätigung eines Abluftventils, wenn der Sitz zu hoch ist.

Die Einstellung des Restfederwegs kann durch verschiedene Einbringungen des Befestigungsohreinsatzes in das erste Befestigungsohr verändert werden oder durch eine Verlagerung des Befestigungsohreinsatzes gegenüber dem ersten Befestigungsohr verändert werden.

Gemäß einer besonders bevorzugten Ausführungsform ist daher der Befestigungsohreinsatz gegenüber dem Befestigungsohr in einer Umfangsrichtung verlagerbar.

Das heißt insbesondere, dass wenn der Befestigungsohreinsatz gegenüber dem ersten Befestigungsohr verlagert wird, wird durch die exzentrische Ausgestaltung der Bohrung die Bohrung ebenso in Umfangsrichtung verlagert, das heißt, dass sich der Abstand der exzentrischen Bohrung zu dem Fahrzeugsitzelement verändert.

Die Umfangsrichtung betrifft hierbei insbesondere, dass der Befestigungsohreinsatz in zumindest einer Richtung kreisförmig ausgebildet ist, in einem Schnitt gesehen.

Erfindungsgemäß ist der Befestigungsohreinsatz zylindrisch ausgestaltet. Entsprechend ist es auch vorteilhaft, wenn das erste Befestigungsohr ebenso zylindrisch ausgebildet ist, insbesondere komplementär zu dem Befestigungsohreinsatz, wobei der Befestigungsohreinsatz zumindest teilweise von dem Befestigungsohr umschlossen wird.

Bei einer Verlagerung des Befestigungsohreinsatzes gegenüber dem Befestigungsohr dreht sich dabei der zylindrische Anteil des Befestigungsohreinsatzes innerhalb des Zylinders des Befestigungsohres.

Eine Verlagerung des Befestigungsohreinsatzes gegenüber dem Befestigungsohr kann auf unterschiedliche Art und Weise erfolgen.

Gemäß einer ersten erfindungsgemäßen Ausführungsform weist dabei der Befestigungsohreinsatz zwei sich in radialer Richtung erstreckende Vorsprünge auf, welche in komplementär ausgebildeten Nuten des Befestigungsohrs eingreifen.

Greifen die Vorsprünge in die jeweiligen Nuten ein, so ist eine Verlagerung des Befestigungsohreinsatzes gegenüber dem Befestigungsohr zunächst nicht möglich. Zuvor muss die Verbindung zwischen den Vorsprüngen und den Nuten gelöst werden, so dass der Befestigungsohreinsatz gegenüber dem Befestigungsohr verlagert werden kann, das heißt insbesondere hierbei, dass der Befestigungsohreinsatz innerhalb des Befestigungsohrs in Umfangsrichtung nach rechts oder nach links gedreht werden kann.

Gemäß einer weiteren Ausführungsform weist das Befestigungsohr zumindest vier Nuten auf, wobei jeweils zwei Nuten als ein Paar angesehen werden und sich gegenüber liegen und ein weiteres Paar gebildet aus zwei weitere Nuten in einem Winkel zueinander in Umfangsrichtung angeordnet sind. Besonders vorteilhaft sind zwei Nuten in einem Winkel von 90° zueinander angeordnet. Durch Lösen der Verbindung von Vorsprüngen und Nuten und dem anschließenden Drehen des Befestigungsohreinsatzes in Umfangsrichtung nach rechts oder nach links, hin zu den nächstliegenden Nuten bzw. dem nächsten Paar an Nuten und dem anschließenden Einrasten der Vorsprünge in diese neuen Nuten hat sich ebenso die exzentrische Bohrung in Umfangsrichtung entsprechend verlagert und hat dementsprechend den Restfederweg des Fahrzeugsitzelements verändert.

Dadurch, dass insbesondere vier Nuten vorgesehen sind, können drei Zustände eingenommen werden, welche mit erster Zustand, zweiter Zustand und dritter Zustand bezeichnet werden. Dabei ist der erste Zustand derjenige Zustand, in welchem die exzentrische Bohrung dem Fahrzeugsitzelement am nächstliegenden ist und der dritte Zustand derjenige Zustand ist, in welchem die exzentrische Bohrung von dem Fahrzeugsitzelement am weitesten entfernt ist. Der zweite Zustand entspricht einem mittleren Zustand zwischen dem ersten Zustand und dem dritten Zustand. Insbesondere ist ein Verlagerungsweg hin zu dem ersten Zustand oder dem dritten Zustand der gleiche.

Es ist dabei natürlich auch vorstellbar, dass mehrere Nuten an dem Befestigungsohr vorgesehen sind, um eine feinere Abstufung des Abstandes der exzentrischen Bohrung zu dem Fahrzeugsitzelement einstellen zu können.

Gemäß einer besonders bevorzugten Ausführungsform sind dabei die Vorsprünge in einem Winkel von 180° zueinander angeordnet. Hierdurch ist es möglich, dass der Befestigungsohreinsatz innerhalb des Befestigungsohres einen besonders guten Halt erreicht, wenn die Vorsprünge in den Nuten eingreifen.

Gemäß einer weiteren erfindungsgemäßen Ausführungsform ist zwischen dem Befestigungsohr und dem Befestigungsohreinsatz eine Feinverzahnung ausgebildet. Mittels einer Feinverzahnung ist es möglich, eine präzise Verlagerung des Befestigungsohreinsatzes gegenüber dem Befestigungsohr zu erreichen. Die Verlagerung wird entsprechend, wie bei der vorhergehenden Ausführungsform, durchgeführt, durch Lösen der Verbindung zwischen dem Befestigungsohr und dem Befestigungsohreinsatz; Drehen des Befestigungsohreinsatzes gegenüber dem Befestigungsohr; Einbringen des Befestigungsohreinsatzes in das Befestigungsohr. Diese Ausführungsform ist ähnlich zu der vorhergehend beschriebenen Ausführungsform, unterscheidet sich aber noch dadurch, dass eine feinere Verlagerung des Befestigungsohreinsatzes gegenüber dem ersten Befestigungsohr erreicht werden kann.

Gemäß einer weiteren alternativen erfindungsgemäßen Ausführungsform ist ein Schneckengetriebe vorgesehen, wobei das Schneckenrad auf dem Befestigungsohreinsatz ausgebildet ist und die Schnecke im Befestigungsohr angeordnet ist. Durch Betätigung des Schneckenrads mittels der Schnecke kann daher der Befestigungsohreinsatz innerhalb des Befestigungsohrs in Umfangsrichtung rotiert werden. Hierdurch ist demnach eine stufenlose Verstellung bzw. Verlagerung des Befestigungsohreinsatzes gegenüber dem Befestigungsohr realisiert. Die Schnecke kann einerseits manuell durch eine Person angetrieben werden, wobei es auch möglich ist, dass die Schnecke mit einem Elektromotor verbunden ist, welcher die Schnecke, basierend auf den Anforderungen bzw. Bedürfnissen der Person, betätigt bzw. antreibt.

Insbesondere ist es vorteilhaft, wenn die Restfederwegverstelleinrichtung ausschließlich mechanisch und manuell betrieben werden kann.

Ebenso wird die zugrundeliegende Aufgabe gelöst durch ein Verfahren zum Einstellen eines Restfederwegs eines Fahrzeugsitzelements für einen Fahrzeugsitz, umfassen die Verfahrensschritte:
a) Lösen des Befestigungsohreinsatzes von dem Befestigungsohr;
b) Drehen des Befestigungsohreinsatzes in Umfangsrichtung nach links oder nach rechts um einen ersten Winkel;
c) Einbringen des Befestigungsohreinsatzes in das Befestigungsohr.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit den entsprechenden Zeichnungen zu entnehmen. Hierbei zeigen:
- Fig. 1: Fahrzeugsitzelement mit einer Restfederwegverstelleinrichtung gemäß einer bevorzugten Ausführungsform in einer perspektivischen Ansicht;
- Fig. 2: das Fahrzeugsitzelement gemäß Figur 1 in einer Seitenansicht;
- Fig. 3: Fahrzeugsitzelement mit einer Restfederwegverstelleinrichtung gemäß einer weiterführenden Ausführungsform;
- Fig. 4: Fahrzeugsitzelement mit einer Restfederwegverstelleinrichtung gemäß einer weiterführenden Ausführungsform;
- Fig. 5A: das Fahrzeugsitzelement mit einer Restfederwegverstelleinrichtung in einem dritten Zustand;
- Fig. 5B: das Fahrzeugsitzelement mit einer Restfederwegverstelleinrichtung in einem zweiten Zustand;
- Fig. 5C: das Fahrzeugsitzelement mit einer Restfederwegverstelleinrichtung in einem ersten Zustand;
- Fig. 6: das Fahrzeugsitzelement mit erstem Befestigungsohr.

In den Figuren werden gleiche Bauelemente mit den gleichen Bezugszeichen bezeichnet, wobei in manchen Figuren die Bezugszeichen zur besseren Übersichtlichkeit weggelassen werden können.

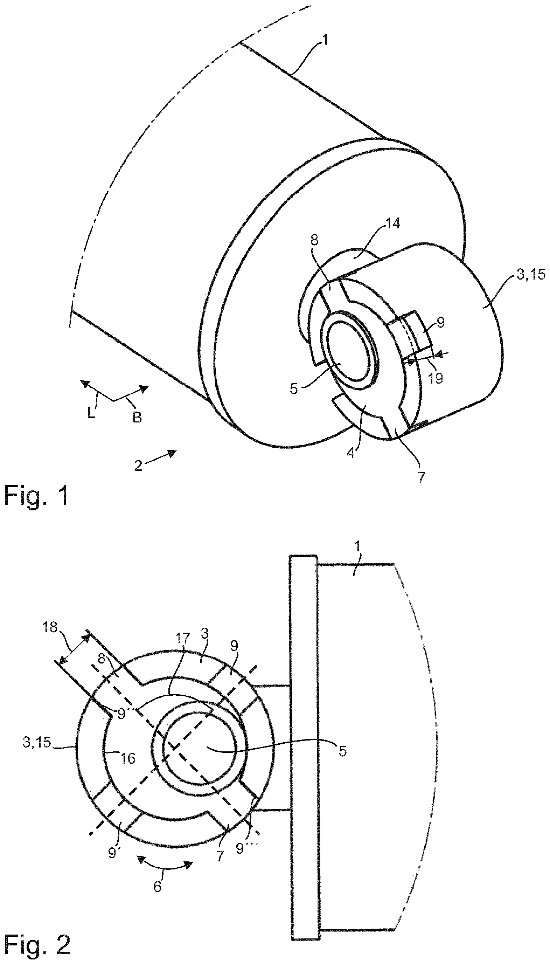

In der Figur 1 ist ein Fahrzeugsitzelement 1 in einer perspektivischen Ansicht dargestellt, wobei an dem Fahrzeugsitzelement 1 ein erstes Befestigungsohr 3 angeordnet ist. Insbesondere kann ein Befestigungselement 14 vorgesehen sein, mittels welchem das erste Befestigungsohr 3 mit dem Fahrzeugsitzelement 1 verbunden ist. Das Befestigungsohr 3 ist dabei zylinderförmig ausgebildet und weist eine äußere Oberfläche 15 und eine innere Oberfläche 16 auf. Insbesondere ist das erste Befestigungsohr 3 in einem Querschnitt kreisförmig ausgebildet mit einem Zylinderring mit einer endlichen Ausdehnung. Weiter ist zu erkennen, dass das erste Befestigungsohr 3 Nuten 9 aufweist, in welche die Vorsprünge 7,8 des Befestigungsohreinsatzes 4 der Restfederwegverstelleinrichtung 2 eingreifen können. Die Anordnung und die Ausgestaltung der Vorsprünge 7,8, sowie der Nuten 9 werden in den nachfolgenden Figuren nochmals genauer dargestellt. Weiter weist der Befestigungsohreinsatz 4 eine exzentrische Bohrung 5 auf, das heißt, dass die Bohrung nicht mittig des Befestigungsohreinsatzes 4 angeordnet ist, sondern um einen gewissen Abstand gegenüber der Mitte des Befestigungsohreinsatzes 4 verschoben ist. Die Mitte des Befestigungsohreinsatzes 4 kann hierbei beispielsweise durch die Mittelachse beziehungsweise Drehachse gebildet sein.

In der Figur 2 ist das Fahrzeugsitzelement 1 in einer Seitenansicht gezeigt. Wie zu erkennen ist, weist das Befestigungsohr 3 insgesamt 4 Nuten 9, 9', 9" und 9''' auf, wobei die Nuten paarweise angeordnet sind, das heißt, dass die Nuten 9 und 9' in radialer Richtung des Befestigungsohrs 3 gegenüberliegend angeordnet sind und das nächste Paar an Nuten 9" und 9'" ebenso gegenüberliegend angeordnet sind. Weiter sind das erste Paar an Nuten 9,9' und das zweite Paar an Nuten 9", 9'" um einen Winkel 17 gegenüber versetzt. Der Winkel 17 beträgt hierbei gemäß einer bevorzugten Ausführungsform 90°. Die Vorsprünge 7, 8 greifen, falls der Befestigungsohreinsatz in das erste Befestigungsohr 3 eingefügt ist, in ein Paar von Nuten 9, 9' oder 9", 9'" ein. Vorliegend greifen die Vorsprünge 7,8 in die Nuten 9" und 9'" ein. Wird der Befestigungsohreinsatz 4 aus dem Befestigungsohr 3 herausgelöst und einer Drehung unterworfen, vorzugsweise in Umfangsrichtung 6 nach links oder nach rechts, und anschließend wieder in das Befestigungsohr 3 eingebracht, insbesondere in ein Paar von Nuten 9, 9', 9", 9"', so ist auch die exzentrische Bohrung 5 in Umfangsrichtung gedreht worden. Es sind hierbei demnach drei verschiedenen Zustände erkennbar, wobei in der Figur 2 der erste Zustand gezeigt ist, wobei der erste Zustand hierbei beschreibt, dass die exzentrische Bohrung dem Fahrzeugsitzelement 1 am nächsten gelegen ist. Ein weiterer Zustand, insbesondere der zweite Zustand beschreibt eine Mittellage der exzentrischen Bohrung, hierbei sind die Vorsprünge 7, 8 in Kontakt mit den Nuten 9, 9'. Weiter ist ein dritter Zustand möglich, wobei der erste Zustand, in welchem die Vorsprünge 7,8 in die Nuten 9" und 9''' eingreifen, ebenso wieder in die selben Nuten 9", 9'" eingreifen, wobei jedoch die Nuten 7,8 in Umfangsrichtung 6 um 180° gedreht sind. Dieser dritte Zustand beschreibt, dass die exzentrische Bohrung 5 nun am weitesten entfernt von dem Fahrzeugsitzelement 1 ist.

Wie weiter aus den Figuren 1 und 2 zu erkennen ist, weisen die Vorsprünge 7,8, sowie die komplementär dazu ausgebildeten Nuten 9, 9', 9", 9'" eine definierte Breite 18 bzw. eine definierte Tiefe 19 auf.

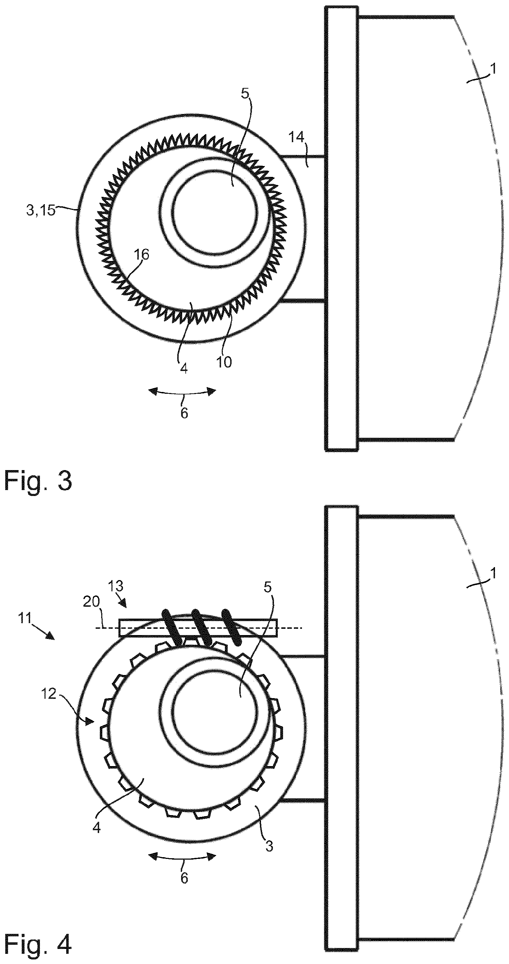

In der Figur 3 ist eine weitere Ausführungsform des Inkontaktbringens des Befestigungsohreinsatzes 4 mit dem ersten Befestigungsohr 3 gezeigt. Wie zu erkennen ist, ist eine Feinverzahnung 10 zwischen dem Befestigungsohreinsatz 4 und dem ersten Befestigungsohr 3 ausgebildet. Insbesondere ist dabei die Feinverzahnung 10 gebildet zwischen dem Befestigungsohreinsatz 4 und der inneren Oberfläche 16 des ersten Befestigungsohrs 3. Dabei kann eine Verlagerung des Befestigungsohreinsatzes 4 gegenüber dem ersten Befestigungsohr 3, wie gemäß der Ausführungsform in Figur 2 gezeigt, durchgeführt werden. Zunächst wird der Befestigungsohreinsatz 4 aus dem ersten Befestigungsohr 3 herausgelöst und anschließend um einen gewünschten Winkel in Umfangsrichtung 6 nach links oder nach rechts gedreht und anschließend wieder in das erste Befestigungsohr 3 eingebracht. Durch die Feinverzahnung 10 ist hierbei eine sehr genaue Einstellung der Position der exzentrischen Bohrung 5 möglich.

Gemäß der Figur 4 ist eine weitere Ausführungsform gezeigt, wobei der Befestigungsohreinsatz 4 als ein Schneckenrad 12 ausgebildet ist, welches mit einer Schnecke 13 in Kontakt steht, wobei die Schnecke 13 mit dem ersten Befestigungsohr 3 um eine erste Drehachse 20 drehbar verbunden ist. Durch Betätigung der Schnecke, das heißt, durch Drehen der Schnecke 13 wird das Schneckenrad 12 angetrieben und der Befestigungsohreinsatz 4 gegenüber dem ersten Befestigungsohr 3 in Umfangsrichtung 6 nach links oder nach rechts verlagert. Durch Drehung des Schneckenrades 12 mittels der Schnecke 13 wird ebenso, wie gemäß den anderen Ausführungsformen, die exzentrische Bohrung 5 gegenüber dem ersten Befestigungsohr 3 verlagert.

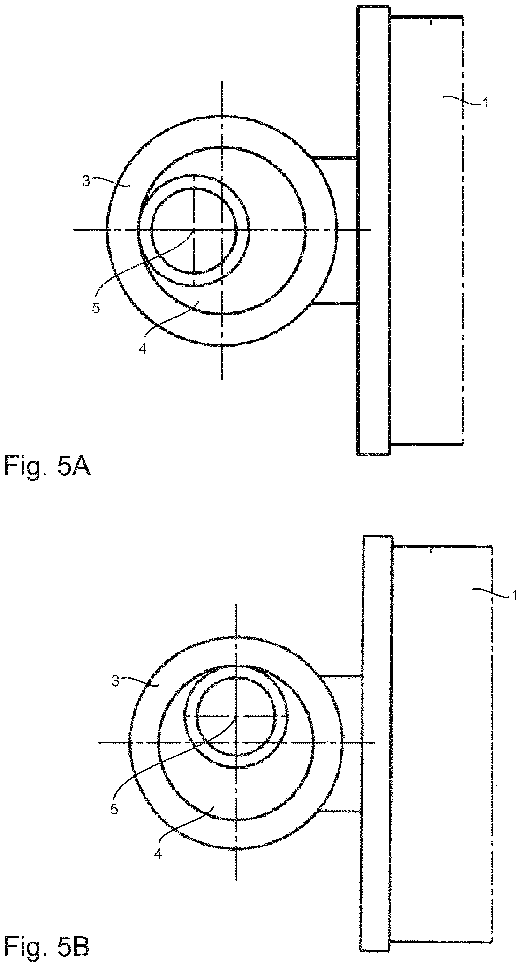

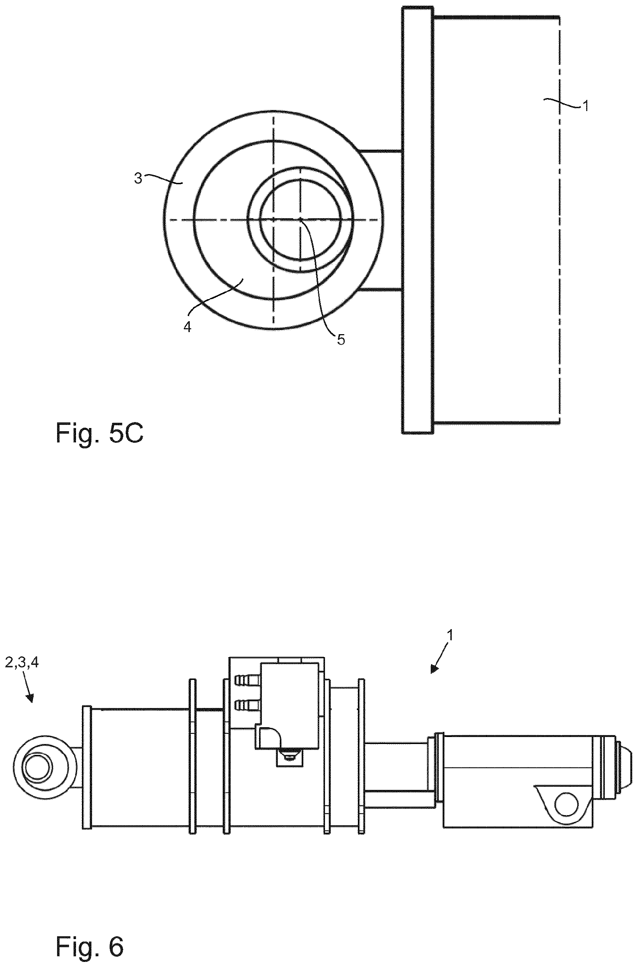

In den Figuren 5A, 5B und 5C werden nochmals die verschiedenen essentiellen Zustände gezeigt. In der Figur 5A wird der dritte Zustand gezeigt, in welchem die exzentrische Bohrung 5 am weitesten von dem Fahrzeugsitzelement 1 entfernt ist. Die Figur 5c hingegen zeigt den ersten Zustand, in welchem die exzentrische Bohrung 5 am nächsten an dem Fahrzeugsitzelement 1 gelegen ist. Die Figur 5B zeigt einen Zwischenzustand, in welchem sich die exzentrische Bohrung in einer Mittellage befindet, welche zwischen dem ersten Zustand in Figur 5A und dem dritten Zustand in der Figur 5C liegt, insbesondere mittig zwischen diesen Zuständen. Diese Zustände können unabhängig von der ausgewählten Ausführungsform eingenommen werden.

In der Figur 6 ist noch schematisch ein Ausführungsbeispiel mit einem Fahrzeugsitzelement 1 gezeigt. Hierbei handelt es sich insbesondere um eine lineare Steuerung des Fahrzeugsitzelements 1, welches gemäß der Figur 6 als eine Niveausteuerung ausgebildet ist.

Darüber hinaus ist es ebenso denkbar, dass ein zweites Befestigungsohr vorgesehen ist, welches ebenso eine Restfederwegverstelleinrichtung 2 mit einem Befestigungsohreinsatz 4 aufweist. Die Ausgestaltungen des zweiten Befestigungsohrs sowie der Restfederwegverstelleinrichtung und des Befestigungsohreinsatzes können wie bezüglich des ersten Befestigungsohrs ausgebildet sein, und wie zuvor beschrieben.

### Bezugszeichenliste

- 1: Fahrzeugsitzelement
- 2: Restfederwegverstelleinrichtung
- 3: erstes Befestigungsohr
- 4: Befestigungsohreinsatz
- 5: exzentrische Bohrung
- 6: Umfangsrichtung
- 7: erster Vorsprung
- 8: zweiter Vorsprung
- 9: Nut
- 9': Nut
- 9": Nut
- 9'": Nut
- 10: Feinverzahnung
- 11: Schneckengetriebe
- 12: Schneckenrad
- 13: Schnecke
- 14: Befestigungselement
- 15: äußere Oberfläche
- 16: innere Oberfläche
- 17: Winkel
- 18: Breite
- 19: Tiefe
- 20: Drehachse

## Patentansprüche

1. Fahrzeugsitzelement (1) mit einer Restfederwegverstelleinrichtung (2) für einen Fahrzeugsitz, wobei das Fahrzeugsitzelement (1) ein erstes Befestigungsohr (3) aufweist, wobei
die Restfederwegverstelleinrichtung (2) in das erste Befestigungsohr (3) einbringbar ist und
die Restfederwegverstelleinrichtung (2) einen Befestigungsohreinsatz (4) mit einer exzentrischen Bohrung (5) aufweist,
wobei der Befestigungsohreinsatz (4) zylindrisch ausgestaltet ist, **dadurch gekennzeichnet, dass** der Befestigungsohreinsatz (4) zwei sich in radialer Richtung erstreckende Vorsprünge (7, 8) aufweist, welche in komplementär ausgebildeten Nuten (9, 9',9", 9"') des ersten Befestigungsohrs (3) eingreifen.

2. Fahrzeugsitzelement (1) für einen Fahrzeugsitz nach Anspruch 1,
**dadurch gekennzeichnet, dass**
der Befestigungsohreinsatz (4) gegenüber dem ersten Befestigungsohr (3) in Umfangsrichtung (6) verlagerbar ist.

3. Fahrzeugsitzelement (1) für einen Fahrzeugsitz nach einem der Ansprüche 1-2,
**dadurch gekennzeichnet, dass**
die Vorsprünge (7, 8) in einem Winkel (17) von 180° zueinander angeordnet sind.

4. Fahrzeugsitzelement (1) für einen Fahrzeugsitz mit einer Restfederwegverstelleinrichtung (2), wobei das Fahrzeugsitzelement (1) ein erstes Befestigungsohr (3) aufweist, wobei die Restfederwegverstelleinrichtung (2) in das erste Befestigungsohr (3) einbringbar ist und die Restfederwegverstelleinrichtung (2) einen Befestigungsohreinsatz (4) mit einer exzentrischen Bohrung (5) aufweist,
wobei der Befestigungsohreinsatz (4) zylindrisch ausgestaltet ist, **dadurch gekennzeichnet, dass** zwischen dem ersten Befestigungsohr (3) und dem Befestigungsohreinsatz (4) eine Feinverzahnung (10) ausgebildet ist.

5. Fahrzeugsitzelement (1) für einen Fahrzeugsitz mit einer Restfederwegverstelleinrichtung (2), wobei das Fahrzeugsitzelement (1) ein erstes Befestigungsohr (3) aufweist, wobei die Restfederwegverstelleinrichtung (2) in das erste Befestigungsohr (3) einbringbar ist und die Restfederwegverstelleinrichtung (2) einen Befestigungsohreinsatz (4) mit einer exzentrischen Bohrung (5) aufweist,
wobei der Befestigungsohreinsatz (4) zylindrisch ausgestaltet ist, **dadurch gekennzeichnet, dass** ein Schneckengetriebe (11) vorgesehen ist, wobei das Schneckenrad (12) auf dem Befestigungsohreinsatz (4) ausgebildet ist und die Schnecke (13) im ersten Befestigungsohr (3) angeordnet ist.

6. Verfahren zum Einstellen eines Restfederwegs eines Fahrzeugsitzelements (1) für einen Fahrzeugsitz gemäß einem der Ansprüche 1-3 oder Anspruch 4, umfassend die Verfahrensschritte:
a) Lösen des Befestigungsohreinsatzes (4) von dem ersten Befestigungsohr (3);
b) Drehen des Befestigungsohreinsatzes (4) in Umfangsrichtung (6) nach links oder rechts um einen ersten Winkel (17);
c) Einbringen des Befestigungsohreinsatzes (4) in das erste Befestigungsohr (3).

## Claims

1. Vehicle seat element (1) for a vehicle seat having a residual spring travel adjustment device (2), the vehicle seat element (1) having a first fastening eye (3),
the residual spring travel adjustment device (2) can be introduced into the first fastening eye (3) and
the residual spring travel adjustment device (2) has a fastening eye insert (4) having an eccentric hole (5), wherein the fastening eye insert (4) is cylindrical,
**characterised in that**
the fastening eye insert (4) has two projections (7, 8) extending in a radial direction that engage in complementarily shaped grooves (9, 9', 9", 9"') of the first fastening eye (3).

2. Vehicle seat element (1) for a vehicle seat according to claim 1,
**characterised in that**
the fastening eye insert (4) is displaceable in a circumferential direction (6) relative to the first fastening eye (3).

3. Vehicle seat element (1) for a vehicle seat according to any of claims 1-2, **characterised in that**
the projections (7, 8) are arranged at an angle (17) of 180° relative to each other.

4. Vehicle seat element (1) for a vehicle seat having a residual spring travel adjustment device (2), the vehicle seat element (1) having a first fastening eye (3),
the residual spring travel adjustment device (2) can be introduced into the first fastening eye (3) and
the residual spring travel adjustment device (2) has a fastening eye insert (4) having an eccentric hole (5), wherein the fastening eye insert (4) is cylindrical,
**characterized in that**
a fine toothing (10) is formed between the first fastening eye (3) and the fastening eye insert (4).

5. Vehicle seat element (1) for a vehicle seat having a residual spring travel adjustment device (2), the vehicle seat element (1) having a first fastening eye (3),
the residual spring travel adjustment device (2) can be introduced into the first fastening eye (3) and
the residual spring travel adjustment device (2) has a fastening eye insert (4) having an eccentric hole (5), wherein the fastening eye insert (4) is cylindrical,
**characterized in that**
a worm gear (11) is provided, the worm wheel (12) being formed on the fastening eye insert (4) and the worm (13) being arranged in the first fastening eye (3).

6. Method for adjusting a residual spring travel of a vehicle seat element (1) for a vehicle seat according to any of claims 1-3 or claim 4, comprising the following method steps:
a) detaching the fastening eye insert (4) from the first fastening eye (3);
b) rotating the fastening eye insert (4) to the left or right in the circumferential direction (6) by a first angle (17);
c) introducing the fastening eye insert (4) into the first fastening eye (3).

## Revendications

1. Élément de siège de véhicule (1) ayant un dispositif de réglage de course de ressort résiduelle (2) pour un siège de véhicule, l'élément de siège de véhicule (1) présentant une première oreille de montage (3), dans lequel
le dispositif de réglage de course de ressort résiduelle (2) est apte à être introduit dans la première oreille de montage (3) et
le dispositif de réglage de course de ressort résiduelle (2) présente un insert d'oreille de montage (4) ayant un alésage excentrique (5),
l'insert d'oreille de montage (4) étant réalisé cylindrique, **caractérisé par le fait que** l'insert d'oreille de montage (4) présente deux saillies (7, 8) s'étendant dans la direction radiale, lesquelles s'engagent dans des rainures (9, 9', 9", 9"') de forme complémentaire de la première oreille de montage (3).

2. Elément de siège de véhicule (1) pour un siège de véhicule, selon la revendication 1,
**caractérisé par le fait que**
l'insert d'oreille de montage (4) est déplaçable par rapport à la première oreille de montage (3) dans la direction périphérique (6).

3. Elément de siège de véhicule (1) pour un siège de véhicule selon l'une des revendications 1 et 2,
**caractérisé par le fait que**
les saillies (7, 8) sont disposées à un angle (17) de 180° l'une par rapport à l'autre.

4. Élément de siège de véhicule (1) pour un siège de véhicule ayant un dispositif de réglage de course de ressort résiduelle (2), l'élément de siège de véhicule (1) présentant une première oreille de montage (3),
le dispositif de réglage de course de ressort résiduelle (2) étant apte à être introduit dans la première oreille de montage (3) et le dispositif de réglage de course de ressort résiduelle (2) présentant un insert d'oreille de montage (4) ayant un alésage excentrique (5),
l'insert d'oreille de montage (4) étant réalisé cylindrique, **caractérisé par le fait qu'**une denture fine (10) est formée entre la première oreille de montage (3) et l'insert d'oreille de montage (4).

5. Élément de siège de véhicule (1) pour un siège de véhicule ayant un dispositif de réglage de course de ressort résiduelle (2), l'élément de siège de véhicule (1) présentant une première oreille de montage (3), le dispositif de réglage de course de ressort résiduelle (2) étant apte à être introduit dans la première oreille de montage (3) et le dispositif de réglage de course de ressort résiduelle (2) présentant un insert d'oreille de montage (4) ayant un alésage excentrique (5),
l'insert d'oreille de montage (4) étant réalisé cylindrique, **caractérisé par le fait qu'**un engrenage à vis sans fin (11) est prévu, la roue à vis sans fin (12) étant formée sur l'insert d'oreille de montage (4) et la vis sans fin (13) étant disposée dans la première oreille de montage (3).

6. Procédé pour le réglage d'une course de ressort résiduelle d'un élément de siège de véhicule (1) pour un siège de véhicule selon l'une des revendications 1 à 3 ou la revendications 4, comportant les étapes de procédé :
a) détacher l'insert d'oreille de montage (4) de la première oreille de montage (3) ;
b) tourner l'insert d'oreille de montage (4) dans la direction périphérique (6) vers la gauche ou vers la droite d'un premier angle (17) ;
c) introduire l'insert d'oreille de montage (4) dans la première oreille de montage (3).
